# EUROPÄISCHE PATENTSCHRIFT

(11) **EP 0 422 358 B1**
(45) Veröffentlichungstag und Bekanntmachung des Hinweises auf die Patenterteilung: **12.07.1995**
(21) Anmeldenummer: 90115674.5
(22) Anmeldetag: 16.08.1990
(51) Int. Cl.: B32B 25/08, B32B 27/04

(54) **Bauteile aus endlosfaserverstärkten Polyamid-Formmassen und Gummi sowie Verfahren zu ihrer Herstellung**
Elements of continuous-fibre-reinforced moulding compositions based on polyamide and rubber, and process for preparing them
Eléments de compositions à mouler à base de polyamide et de caoutchouc renforcés par des fibres continues ainsi que leurs procédés de fabrication

(30) Priorität: 12.10.1989 DE 3934091
(43) Veröffentlichungstag der Anmeldung: 17.04.1991
(73) Patentinhaber: HÜLS AKTIENGESELLSCHAFT, 45764 Marl (DE)
(72) Erfinder: Baron, Christian, D-4358 Haltern (DE); Grosse-Puppendahl, Thomas, D-4358 Haltern (DE); Jadamus, Hans, Dr., D-4370 Marl (DE); Richter, Klaus-Peter, Dr., D-4370 Marl (DE)

(56) Entgegenhaltungen:
- EP-A- 0 344 427

## Beschreibung

Die Erfindung betrifft Bauteile, die aus mindestens einer endlosfaserverstärkten, vorzugsweise thermoplastischen Polyamid- und einer Gummikomponente bestehen, die ohne Verwendung von Haftvermittlern, Klebern oder ähnlichem fest miteinander verbunden sind, sowie Verfahren zur Herstellung derartiger Bauteile.

Bekanntlich kann ein einziger Werkstoff nicht immer alle Eigenschaften beitragen, die von einem Gegenstand verlangt werden. Solche unvereinbaren Eigenschaftskombinationen sind z. B. hohe Festigkeit, Steifigkeit oder Härte einerseits und gute Schwingungsdämpfung, hohe Elastizität und Rutschfestigkeit andererseits. Soll ein Bauteil diese Eigenschaften vereinen, dann verwendet man Verbunde aus mehreren Werkstoffen.

Grundsätzlich könnte man daran denken, derartige Verbunde aus Metall und Gummi herzustellen. Diese Werkstoffkombination weist jedoch erhebliche Nachteile auf:
1. Metalle besitzen eine hohe Dichte, d. h. die daraus hergestellten Bauteile sind schwer.
2. Der Verbund zwischen Metall und Gummi ist ohne Haftvermittler, Primer oder Kleber nicht möglich.
3. Die Herstellung von komplexen Bauteilen, wie z. B. dreidimensionale Strukturen aus Metall, ist sehr aufwendig.

Ziel der vorliegenden Erfindung war es daher, Verbundkörper zu schaffen, die aus einem endlosfaserverstärkten, vorzugsweise thermoplastischen Werkstoff und Gummi bestehen und die ohne Verwendung von Haftvermittlern, Primern oder Klebern fest miteinander verbunden werden können.

Endlosfaserverstärkte Thermoplaste werden z. B. in P. E. McMahon "Developments in Reinforced Plastics-4", Elsevier Applied Science Publishers, 1984, sowie in G. Brandt und H. Richter, Kunststoffe 77 (1987), S. 40 beschrieben. Die in diesen Artikeln beschriebenen Systeme würden den o. g. Anforderungen hinsichtlich Festigkeit, Steifigkeit und Härte genügen; die Überprüfung zeigt jedoch, daß die beschriebenen verstärkten Thermoplaste mit Kautschuk keinen festen Verbund eingehen. Der vulkanisierte Kautschuk läßt sich mit geringer Kraft, d. h. weniger als 0,7 N/mm, im Falle eines Verbundes Kohlenstoffaser/Polyetheretherketon/E-SBR-Kautschuk, an der Grenzfläche vom Thermoplasten abziehen. Eine derartig schwache Haftung ist für technische Zwecke vollkommen ungenügend.

Aus der DE-OS 36 15 965 ist die Herstellung eines festen Verbundes zwischen endlosfaserverstärkten Polyphenylenether-Formmassen und bestimmten, Doppelbindungen enthaltenden Kautschuken wie z. B. Styrol-Butadien-Kautschuk, bekannt. Die hierbei erzielten Haftfestigkeiten sind beachtlich, allerdings ist die Beständigkeit der verwendeten Polyphenylenether-Formmassen gegenüber Lösemitteln ebenso unbefriedigend wie ihre Stabilität bei Bewitterung. Nach dem Stand der Technik ist es also nicht möglich, Bauteile aus endlosfaserverstärkten Thermoplasten einerseits und Kautschuk andererseits auf einfache Weise herzustellen, die zudem eine gute Stabilität gegenüber Lösemitteln und Bewitterung aufweisen.

Es wurde nun gefunden, daß die gesuchten Eigenschaftskombinationen in Bauteilen zu verwirklichen sind, die aus mindestens zwei fest miteinander verbundenen Formstoffen A und B bestehen, wobei
a) der Formstoff A aus einer Matrix aus Polyamid (PA) oder einer PA-haltigen Formmasse und einem darin eingelagerten, ungeschnittenen, faserförmigen Festigkeitsträger besteht und
b) der Formstoff B der nach der peroxidischen Vulkanisation einer auf A aufgebrachten Kautschukzusammensetzung erhaltene Gummi ist, wobei die Kautschukzusammensetzung aus folgenden Komponenten besteht:
   - 100 Gewichtsteilen eines mit Carboxyl- oder Anhydridgruppen funktionalisierten Kautschuks;
   - 10 bis 300 Gewichtsteilen Füllstoffe;
   - 1 bis 10 Gewichtsteilen peroxidischer Vulkanisationsmittel;
   - 0 bis 4 Gewichtsteilen Vulkanisationsaktivatoren;
   - 0 bis 150 Gewichtsteilen Weichmacher;
   - ggf. weiteren üblichen Zusatzstoffen wie Stabilisatoren, Verarbeitungshilfsmitteln, Farbpigmenten und/oder Flammschutzmitteln.

Gegenstand der vorliegenden Erfindung sind ferner Verfahren zur Herstellung dieser Bauteile nach den Ansprüchen 9 und 10.

Zwar ist aus der EP-OS 0 344 427 ein "Verfahren zur Herstellung eines chemischen Verbundes zwischen Formmassen auf Basis von aliphatischen Polyamiden einerseits und Carboxylgruppen enthaltenden Kautschuken andererseits sowie die nach diesem Verfahren hergestellten Werkstoffe" bekannt, aber in dieser Anmeldung findet sich kein Hinweis, daß man ungeschnittene, vorzugsweise nichtmetallische Fasern mit verwenden kann.

Der die Formmassen auf Basis von PA verstärkende faserförmige Festigkeitsträger besteht aus ungeschnittenen, vorzugsweise nichtmetallischen Fasern wie z. B. Kohlenstoff-, Aramid- und/oder Glasfasern. Die Fasern können beispielsweise in Form von Garnen, Geweben, Matten, Vliesen, UD-Tapes, Gelegekomplexen, Rovings oder als einzelne Fasern vorliegen. Die Fasern werden vom Hersteller üblicherweise mit einer Schlichte behandelt. Steifigkeit und Festigkeit der endlosfaserverstärkten PA-Formmassen werden hierbei durch Art, Ausrichtung und Anteil der faserförmigen Festigkeitsträger und durch die Zusammensetzung der Matrix bestimmt.

Die erfindungsgemäß verwendeten Polyamide weisen in ihrer Hauptkette -CO-NH-Bindungen auf. Es kommen alle Polyamide in Frage, die durch Erhitzen geschmolzen werden können. Spezielle Beispiele für geeignete Polyamide sind PA 46, PA 6, PA 66, PA 610, PA 612, PA 1010, PA 1012, PA 11, PA 12 und/oder PA 1212. Die Polyamide werden in bekannter Weise durch Polykondensation hergestellt. Das Verhältnis der COOH- und NH₂-Gruppen im Polyamid beträgt vorzugsweise 1 : x mit 100 > x > 1.

Die Formmassen auf Basis von PA können z. B. Polyphenylenether enthalten. Geeignete Polyamid/Polyphenylenether-Formmassen werden durch Schmelzen und Vermischen von mindestens 30 Gewichtsprozent eines Polyamids mit bis zu 70 Gewichtsprozent eines Polyphenylenethers hergestellt. Formmassen auf Basis von Polyamiden und Polyphenylenethern werden z. B. in den DE-OSS 30 27 104 und 35 18 278 sowie in der EP-OS 0 147 874 und EP-PS 0 024 120 beschrieben. Es ist dem Fachmann bekannt, daß diese Formmassen üblicherweise einen Verträglichkeitsvermittler enthalten.

Die Formmassen enthalten darüber hinaus gegebenenfalls weitere Zusatzstoffe wie z. B. Stabilisatoren, Verarbeitungshilfsmittel, Ruß, Graphit, Titandioxid, Zinksulfid, Farbpigmente, Schlagzähmacher und Flammschutzmittel. Der Anteil dieser Zuschlagstoffe liegt vorzugsweise unter 30 %, bezogen auf die gesamte Formmasse.

Die zur Herstellung der Gummikomponente B verwendete Kautschukzusammensetzung enthält einen Carboxyl- oder Anhydridgruppen enthaltenden Kautschuk, der beispielsweise in bekannter Weise durch Carboxylierung mit ungesättigten Säuren oder Säurederivaten wie z. B. Maleinsäure oder Maleinsäureanhydrid (MSA) hergestellt wird (vgl. z. B. US-PS 4 010 223). Es ist auch möglich, diese Kautschuke durch Copolymerisation mit ungesättigten Säuren, wie z. B. Acrylsäure, herzustellen. Grundsätzlich sind alle Carboxyl- oder Anhydridgruppen enthaltenden Kautschuke geeignet, die sich auf bekannte Keise herstellen lassen. Bevorzugt werden jedoch carboxyl- oder anhydridgruppenhaltige EP(D)M- und NBR-Kautschuke.

EP(D)M-Kautschuke sind Kautschuke, die in bekannter Keise durch Polymerisation eines Gemisches aus Ethylen und Propylen und gegebenenfalls einem Dien in Gegenwart eines Ziegler-Natta-Katalysators hergestellt werden.

Der EPDM-Kautschuk wird etwa durch Polymerisation eines Gemisches aus mehr als 25 % Ethylen, mehr als 25 % Propylen und 1 bis 10 % insbesondere 1 bis 3 % eines nicht konjugierten Diens wie Bicyclo-(2.2.1)-heptadien, Hexadien-1.4, Dicyclopentadien und insbesondere 5-Ethylidennorbornen hergestellt.

Geeignete EPM-Kautschuke werden z. B. von der Fa. EXXON unter der Bezeichnung EXXELOR VA 1803 (Warenzeichen angemeldet) hergestellt. Ein geeigneter EPDM-Kautschuk ist z. B. MSA-modifiziertes BUNA^{(R)} AP (Produktbezeichnung: Versuchsprodukt X 4496) der Bunawerke Hüls GmbH, D-4370 Marl.

Nitril-Kautschuke (NBR) werden durch Copolymerisation von 50 bis 80 Gewichtsprozent Butadien und entsprechend 50 bis 20 Gewichtsprozent Acrylnitril hergestellt. Eine besondere Modifikation bilden die Carboxylgruppen enthaltenden Nitrilkautschuke. Es handelt sich hier insbesondere um Mischpolymerisate aus Butadien, Acrylnitril und Acrylsäure, Methacryl- oder Sorbinsäure.

Geeignete NBR-Kautschuke werden z. B. von Goodyear Tire & Rubber Company, Akron, Ohio, USA, unter der Bezeichnung CHEMIGUM^{(R)} fix 775 und von BF Goodrich, NV, Arnheim, Niederlande, unter dem Handelsnamen HYCAR^{(R)} 1472 hergestellt.

Als Füllstoffe eignen sich alle Stoffe, die üblicherweise in EP(D)M- und NBR-Kautschuken eingesetzt werden, wie z. B. Ruß, Kieselsäure, Silikate, Calciumcarbonat, Zinkoxid und/oder Stearinsäure.

Die Kautschukzusammensetzung kann auf 100 Gewichtsteile Kautschuk bis zu 150 Gewichtsteile Weichmacher enthalten. Geeignete Weichmacher sind z. B. naphthenische Öle oder synthetische Weichmacher wie Ester oder Ether in einer Menge von vorzugsweise bis zu 50 Gewichtsteilen, bezogen auf 100 Gewichtsteile Kautschuk.

Geeignete peroxidische Vulkanisationsmittel sind die dem Fachmann bekannten Peroxide wie z. B. 2,5-Dimethyl-2,5-bis(tert.-butyl-peroxy)hexan, Dicumylperoxid, 4,4-Di-tert.-butylperoxy-n-butyl-valerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAG) und Acrylate wie Ethylenglykoldimethacrylat (EDMA) und Trimethylolpropantrimethacrylat (TRIM). Bevorzugt werden TAC und/oder EDMA verwendet.

Die Vulkanisate zeichnen sich durch eine hohe Zugfestigkeit, gute Elastizität und sehr guten Abriebwiderstand aus. Die für Nitrilkautschuke typische Öl- und Lösemittelbeständigkeit wird durch den Zusatz von ungesättigten Säurederivaten bei der Polymerisation nicht beeinträchtigt.

Gestalt und Ausdehnung der im Bauteil verbundenen Formstoffe können stark variieren. Sie können praktisch gleich sein wie z. B. in Sandwichstrukturen oder ungleich wie z. B. in großflächigen Gummimatten mit verstärkten Randzonen oder in großflächigen steifen Teilen mit Gummifüßen.

Die Herstellung der erfindungsgemäßen Bauteile erfolgt grundsätzlich in 2 Stufen. Zunächst wird der endlosfaserverstärkte Polyamid-Formstoff A hergestellt und anschließend wird durch Vulkanisation der darauf aufgebrachten Kautschukzusammensetzung das Bauteil B hergestellt.

Das Aufbringen der thermoplastischen Formmasse auf den Festigkeitsträger kann auf unterschiedliche Art und Weise erfolgen. Nachfolgend seien einige technisch sinnvolle Verfahren genannt:
I. Die faserförmigen Festigkeitsträger werden in erster Stufe mit einer Lösung des Thermoplasten getränkt. Als Losemittel kommen diejenigen infrage, die Polyamide zu losen imstande sind, also beispielsweise m-Kresol. Anschließend wird das Lösemittel entfernt. Gleichzeitig oder anschließend erhält der Formstoff A seine Form. Dies erfolgt zweckmäßigerweise bei erhöhter Temperatur und gegebenenfalls bei Unter- oder Überdruck. Auf diese Weise können sowohl Rovings als auch Gewebe, UD-Tapes etc. getränkt werden.
II. Die faserförmigen Festigkeitsträger, wie z. B. Gewebe, UD-Tapes etc., werden alternierend mit dünnen PA-Folien aufeinander gelegt und anschließend unter Druck und Temperatur in einer Presse oder einem Autoklaven zum Formstoff A geformt.
III. Auf den faserförmigen Festigkeitsträger wird direkt ein PA-Pulver mittels Streubeschichtung aufgebracht. Anschließend wird das Gewebe mit dem locker anhaftenden Pulver durch eine Heizstrecke, vorzugsweise einen Infrarot-Ofen, geführt, wo das Polymer schmilzt und an den Fasern "festklebt". Das fertige Prepreg wird über einen Kalander abgekühlt und kann dann z. B. in der Presse unter Druck und Temperatur in die gewünschte Form gebracht werden.
IV. Im Falle von Rovings kann die Herstellung des Formstoffes A auch folgende Verfahrensschritte umfassen:
   1. Zunächst wird der Faserroving gespreizt und mit dem Polymerpulver im Wirbelbett benetzt.
   2. Anschließend wird der benetzte Faserroving mit einem extrudierten Film aus demselben Material überzogen.
   3. Diese Rovings können dann zu Gewebe oder UD-Prepregs weiterverarbeitet werden, die z. B. in der Presse unter Druck und Temperatur zum Formstoff A führen.

Wichtig ist in jedem Fall, daß der faserförmige Festigkeitsträger hierbei allseitig mit Polyamid oder der polyamidhaltigen Formmasse umschlossen wird.

Die Fertigung der aus steifen und gummielastischen Formstoffen zusammengesetzten Bauteile kann auf verschiedene Weise erfolgen:
1. Durch Beaufschlagen des Formstoffes A mit der Kautschukmasse und Pressen unter Vulkanisationsbedingungen.
2. Durch Extrusionsbeschichtung von vorbereiteten Rovings oder vorgefertigten steifen Formteilen mit Kautschuk und anschließender Vulkanisation.
3. Durch Anspritzen von Kautschuk an vorgefertigte steife Teile und anschließender Vulkanisation im gleichen Werkzeug.

Die optimalen Vulkanisationsbedingungen hängen von der gewählten Kautschukmischung, insbesondere ihrem Vulkanisationssystem, sowie der Formteilgestaltung ab.
Geeignete Vulkanisationstemperaturen liegen zwischen 140 °C und 200 °C, bevorzugt zwischen 150 °C und 180 °C. Bei Verwendung von PA-Werkstoffen mit niedrigen Formbeständigkeiten in der Wärme wählt man Temperaturen im unteren Teil der angegebenen Bereiche.

Die Vulkanisationszeiten liegen üblicherweise zwischen 3 und 30 Minuten, vorzugsweise zwischen 5 und 15 Minuten.

Die erfindungsgemäßen Bauteile können in vielfältiger Weise zu Einsatz kommen. Bei unidirektionaler Ausrichtung der Festigkeitsträger kommen vor allem Flankenschutzelemente für Fahrzeuge wie Seitenstreifen, Türaufsatzteile oder Schwellerverkleidungen in Betracht. Ein weiteres Einsatzgebiet sind z. B. Förderbänder, wobei die Flächen auf übliche Weise durch Karkassen verstärkt sein können.

Einsatzgebiete, in denen Festigkeitsträger orthotrop oder quasiisotrop ausgerichtet sind, betreffen rutschfeste Platten sowie Türen und Klappen mit Dichtungslippen.

Für ballistische Anwendungen (Panzerungen) kommen Vielfach-Sandwich-Strukturen aus dünnen Schichten von PA-beschichteten Festigkeitsträgern und ggf. verstärktem Kautschuk mit vorzugsweise quasiisotroper Ausrichtung der Festigkeitsträger zum Einsatz.

### Beispiel 1:

Herstellung und Eigenschaften einer Verbundplatte aus einem Glasgewebe/PA-Verbund und einem funktionalisierten EPM-Kautschuk

### Einsatzstoffe und Herstellung:

### 1.1 Glasgewebe:

Käufliches Textilgewebe W 2415 mit einem Flächengewicht von 170 g/m² der Fa. Verseidag Industrietextilien GmbH, D-4150 Krefeld

### 1.2 Polyamid:

Käufliches PA 12-Pulver der Fa. Hüls AG, D-4370 Marl, mit der Bezeichnung VESTOSINT^{(R)} X 7004 und einer Korngröße < 45 »m. Die Eigenschaften der VESTOSINT^{(R)}-Typen sind in der Produktinformation "VESTOSINT BESCHICHTUNGSPULVER" 4151/4 vom Juli 1988 zusammengefaßt.

### 1.3 Vorbehandlung des Glasgewebes

Das Polyamid 12-Pulver wird mittels einer Streubeschichtung gleichmäßig auf das Textilglasgewebe aufgebracht. Das in dieser Weise beschichtete Gewebe wird anschließend einem auf 220 °C aufgeheizten Infrarot-Ofen zugeführt, wo das Pulver schmilzt, in das Gewebe eindringt und an den Fasern festklebt. Das fertige Prepreg wird über einen Kalander abgekühlt und aufgewickelt. Das Verhältnis Glasfaser zu Polyamid ermittelt man durch Rückwaage.

### 1.4 Platten aus einem Glasgewebe/PA-Verbund

Die vorgefertigten PA-Prepregs werden je nach gewünschter Plattendicke übereinandergelegt und in der Presse mittels eines Distanzrahmens bei 220 °C und 25 bar zu Platten verarbeitet.

### Eigenschaften der Platten (2 mm dick)

| Volumenverhältnis Glasgewebe zu Polyamid-Matrix | Zug-E-Modul in MPa (DIN 53 457) | Zugfestigkeit in MPa (DIN 53 455) | Reißdehnung in % (DIN 53 455) |
|---|---|---|---|
| 27 : 73 | 6 800 | 240 | 4,4 |

### 1.5 Kautschuk: EXXELOR VA 1803

Es handelt sich um einen MSA-modifizierten EPM-Kautschuk der Fa. Exxon Chemicals, Wilmington, Delaware, USA. Die Eigenschaften des Produktes sind der technischen Information "EXXELOR VA" vom 01.03.1988 zu entnehmen.

Ein rußgefüllter, weichmacherhaltiger EPM-Kautschuk wird auf einer Walze bei 60 °C durch Vermischen folgender Bestandteile hergestellt:

| Gewichtsteile | Stoff |
|---|---|
| 100 | EXXELOR VA 1803 |
| 5 | Zinkoxid |
| 60 | Paraffinisches Öl "SUNPAR 150" (Hersteller: Fa. Sunoil, Belgien LV, Antwerpen) |
| 100 | DUREX O, ein halbverstärkender Gasruß der Fa. Degussa, D-6450 Hanau. |
| 1,5 | VULKANOX^{(R)} HS, ein Alterungsschutzmittel der Bayer AG, D-5090 Leverkusen (2,2,4-Trimethyl-1,2-dihydrochinolin) |
| 1,0 | Triallylcyanurat (TAC) von Fa. Degussa, D-6450 Hanau |
| 7,5 | PERKADOX^{(R)} 14/40 von Fa. Akzo-Chemie, Niederlande (Peroxid) |

### 1.6 Verbundplatten mit Kautschuk

Zur Demonstration der Verbundwirkung werden Verbundplatten hergestellt, indem man die unter 1.4 gefertigten Platten zu einem Drittel mit einer Teflonfolie abdeckt, auf die Platte ein passendes Kautschukfell legt, den Verbund nach dem Preßverfahren herstellt und schließlich Probekörper mit einer Breite von 25 mm aussägt. Diese Probekörper werden einem Schälversuch entsprechend DIN 53 539 unterzogen.

### Ergebnis:

Für Beispiel 1 werden folgende Eigenschaften ermittelt:

| Kautschuk | Vulkanisationstemtemperatur in °C | Vulkanisationszeit in min | Trennkraft in N/mm DIN 53 539 | Trennart c = cohäsiv a = adhäsiv |
|---|---|---|---|---|
| 1.5 | 170 | 15 | 8,8 | c |

Die Trennung im Schälversuch (DIN 53 539) erfolgt cohäsiv, d. h. eine Trennung des Verbundes erfolgt nicht in der Grenzfläche Kunststoff/Gummi, sondern innerhalb des Gummiteils.

### Beispiel 2:

Die Auswahl der Einsatzstoffe und die Herstellung der PA/Glasgewebe-Verbundplatten erfolgt wie unter 1.1 bis 1.4 im Beispiel 1.

### 2.5 Kautschuk: CHEMIGUM^{(R)} NX 775

Es handelt sich um einen Carboxylgruppen enthaltenden NBR-Kautschuk der Fa. Goodyear Tire & Rubber, Akron, Ohio, USA. Die Eigenschaften des Produktes sind der Produktinformation "CHEMIGUM NX 775", November 1987, zu entnehmen. Ein füllstoff- und weichmacherhaltiger NBR-Kautschuk wird auf einer Walze bei 60 °C durch Vermischen folgender Bestandteile hergestellt:

| Gewichtsteile | Stoff |
|---|---|
| 100 | CHEMIGUM^{(R)} NX 775 |
| 40 | VULKASIL^{(R)} C, eine hochaktive Kieselsäure der Bayer AG, D-5090 Leverkusen |
| 0,5 | EDMA (Ethylenglykoldimethacrylat) der Fa. Degussa, D-6450 Hanau |
| 1,0 | Stearinsäure |
| 3,0 | PERKADOX^{(R)} 40 (Peroxid) der Fa. Akzo-Chemie, Niederlande |

### 2.6 Verbundplatten mit Kautschuk

Zur Demonstration der Verbundwirkung werden Verbundplatten hergestellt, indem man die unter 1.4 gefertigten Platten zu einem Drittel mit einer Teflonfolie abdeckt, auf die Platte ein passendes Kautschukfell legt, den Verbund nach dem Preßverfahren herstellt und schließlich Probekörper mit einer Breite von 25 mm aussägt. Diese Probekörper werden einem Schälversuch entsprechend DIN 53 539 unterzogen.

### Ergebnis

Für Beispiel 2 werden folgende Eigenschaften ermittelt:

| Kautschuk | Vulkanisationstemtemperatur in °C | Vulkanisationszeit in min | Trennkraft in N/mm DIN 53 539 | Trennart c = cohäsiv a = adhäsiv |
|---|---|---|---|---|
| 2.5 | 170 | 10 | 12,7 | c |

Die Trennung im Schälversuch (DIN 53 539) erfolgt cohäsiv, d. h. eine Trennung des Verbundes erfolgt nicht in der Grenzfläche Kunststoff/Gummi, sondern innerhalb des Gummiteils.

## Patentansprüche

1. Bauteile aus mindestens zwei fest miteinander verbundenen Form stoffen A und B, wobei
a) der Formstoff A aus einer Matrix aus Polyamid oder einer polyamidhaltigen Formmasse und einem darin eingelagerten, ungeschnittenen, faserförmigen Festigkeitsträger besteht und
b) der Formstoff B der nach der peroxidischen Vulkanisation einer auf A aufgebrachten Kautschukzusammensetzung erhaltene Gummi ist, wobei die Kautschukzusammensetzung aus folgenden Komponenten besteht:
- 100 Gewichtsteilen eines mit Carboxyl- oder Anhydridgruppen funktionalisierten Kautschuks;
- 10 bis 300 Gewichtsteilen Füllstoffe;
- 1 bis 10 Gewichtsteilen peroxidischer Vulkanisationsmittel;
- 0 bis 4 Gewichtsteilen Vulkanisationsaktivatoren;
- 0 bis 150 Gewichtsteilen Weichmacher;
- gegebenenfalls weiteren üblichen Zusatzstoffen.

2. Bauteile gemäß Anspruch 1,
dadurch gekennzeichnet,
daß man als Polyamid PA 46, PA 6, PA 66, PA 610, PA 612, PA 1010, PA 1012, PA 11, PA 12 und/oder PA 1212 einsetzt.

3. Bauteile gemäß den Ansprüchen 1 und 2,
dadurch gekennzeichnet,
daß die Polyamide COOH- und NH₂-Endgruppen im Verhältnis 1 : x mit 100 > x > 1 enthalten.

4. Bauteile gemäß den Ansprüchen 1 bis 3,
dadurch gekennzeichnet,
daß die polyamidhaltige Formmasse bis zu 70 Gew.-% eines Polyphenylenethers, bezogen auf die Summe aus Polyphenylenether und Polyamid, enthält.

5. Bauteile gemäß den Ansprüchen 1 bis 4,
dadurch gekennzeichnet,
daß der Festigkeitsträger aus Glas- Aramid- und/oder Kohlenstofffasern besteht, die in Form von Garnen, Geweben, Matten, Vliesen, UD-Tapes, Gelegekomplexen, Rovings oder als einzelne Fasern vorliegen.

6. Bauteile gemäß den Ansprüchen 1 bis 5,
dadurch gekennzeichnet,
daß die Kautschukzusammensetzung einen carboxyl- oder anhydridgruppenhaltigen EP(D)M- oder NBR-Kautschuk enthält.

7. Bauteile gemäß den Ansprüchen 1 bis 6,
dadurch gekennzeichnet,
daß als Füllstoffe der Kautschukzusammensetzung Ruß, Kieselsäure, Silikate, Calciumcarbonat, Zinkoxid und/oder Stearinsäure verwendet werden.

8. Bauteile gemäß den Ansprüchen 1 bis 7,
dadurch gekennzeichnet,
daß als Weichmacher bis zu 50 Gewichtsteile naphthenische Öle, bezogen auf 100 Gewichtsteile Kautschuk, verwendet werden.

9. Verfahren zur Herstellung der Bauteile gemäß den Ansprüchen 1 bis 8,
dadurch gekennzeichnet,
daß man die faserförmigen Festigkeitsträger allseitig fit Polyamid oder einer polyamidhaltigen Formmasse umschließt und auf den so hergestellten Formstoff A die Kautschukzusammensetzung aufbringt und diese vulkanisiert.

10. Verfahren gemäß Anspruch 9,
dadurch gekennzeichnet,
daß man die Vulkanisation bei Temperaturen zwischen 140 und 200 °C in 3 bis 30 Minuten, vorzugsweise bei 150 bis 180 °C in 5 bis 15 Minuten durchführt.

## Claims

1. A structural component made from at least two shaped materials A and B which are strongly bonded to one another, where
a) shaped material A is composed of a matrix of polyamide or a polyamide-containing moulding composition and an uncut, fibrous reinforcing material embedded therein, and
b) shaped material B is the rubber obtained after peroxide vulcanization of a rubber composition applied to A, where the rubber composition is composed of the following components:
- 100 parts by weight of a carboxyl- or anhydride-functionalized rubber;
- from 10 to 300 parts by weight of fillers;
- from 1 to 10 parts by weight of peroxidic vulcanization agents;
- from zero to 4 parts by weight of vulcanization activators;
- from zero to 150 parts by weight of plasticizers;
- optionally further conventional additives.

2. A structural component according to claim 1, characterized in that PA 46, PA 6, PA 66, PA 610, PA 612, PA 1010, PA 1012, PA 11, PA 12 and/or PA 1212 is employed as polyamide.

3. A structural component according to either of claims 1 and 2, characterized in that the polyamides contain COOH and NH₂ terminal groups in a ratio of 1 : x, where 100 > x > 1.

4. A structural component according to any of claims 1 to 3, characterized in that the polyamide-containing moulding composition contains up to 70% by weight of a polyphenylene ether, based on the total amount of polyphenylene ether and polyamide.

5. A structural component according to any of claims 1 to 4, characterized in that the reinforcing material is composed of glass fibres, aramid fibres and/or carbon fibres in the form of yarns, woven fabrics, mats, nonwovens, UD tapes, laid-fibre complexes, rovings or individual fibres.

6. A structural component according to any of claims 1 to 5, characterized in that the rubber composition contains a carboxyl- or anhydride-containing EP(D)M or NBR rubber.

7. A structural component according to any of claims 1 to 6, characterized in that carbon black, silicic acid, silicates, calcium carbonate, zinc oxide and/or stearic acid are used as fillers in the rubber composition.

8. A structural component according to any of claims 1 to 7, characterized in that up to 50 parts by weight of naphthenic oils, based on 100 parts by weight of rubber, are used as plasticizer.

9. A process for the production of a structural component according to any of claims 1 to 8, characterized in that the fibrous reinforcing material is surrounded on all sides by polyamide or a polyamide-containing moulding composition, and the rubber composition is applied to the resultant shaped material A and vulcanized.

10. A process according to claim 9, characterized in that the vulcanization is carried out at temperatures of from 140 to 200°C for from 3 to 30 minutes, preferably at from 150 to 180°C for from 5 to 15 minutes.

## Revendications

1. Composants constitués d'au moins deux plastiques moulés A et B, assemblés à demeure l'un à l'autre, dans lesquels :
a) le plastique moulé A est constitué d'une matrice de polyamide ou d'un mélange à mouler contenant un polyamide, ainsi que d'un agent de renforcement fibreux non coupé qui y est incorporé, et
b) le plastique moulé B est le caoutchouc que l'on obtient après vulcanisation aux peroxydes, d'une composition de caoutchouc appliquée sur A, la composition de caoutchouc comprenant les constituants suivants :
- 100 parties en poids d'un caoutchouc fonctionnalisé par des groupes carboxyle ou anhydride ;
- 10 à 300 parties en poids de matières de charge ;
- 1 à 10 parties en poids d'agents de vulcanisation aux peroxydes ;
- 0 à 4 parties en poids d'activateurs de vulcanisation ;
- 0 à 150 parties de poids d'un plastifiant ;
- éventuellement d'autres additifs usuels.

2. Composants selon la revendication 1,
caractérisés par le fait que l'on utilise comme polyamide le PA 46, le PA 6, le PA 66, le PA 610, le PA 612, le PA 1010, le PA 1012, le PA 11, le PA 12 et/ou le PA 1212.

3. Composants selon les revendications 1 et 2,
caractérisés par le fait que les polyamides contiennent des groupes terminaux COOH et NH₂ selon un rapport 1 : x tel que 100 > x > 1.

4. Composants selon les revendications 1 à 3,
caractérisés par le fait que le mélange à mouler contenant un polyamide contient jusqu'à 70 % en poids d'un poly(oxyde de phénylène), par rapport à la somme du poly(oxyde de phénylène) et du polyamide.

5. Composants selon les revendications 1 à 4, caractérisés par le fait que l'agent de renforcement est constitué de fibres de verre, d'aramide et/ou de carbone, qui se présentent sous forme de filés, de tissus, de mats, de non-tissés, de bandes UD, de complexes à grilles, de stratifils ou de fibres individuelles.

6. Composants selon les revendications 1 à 5, caractérisés par le fait que la composition de caoutchouc contient un caoutchouc EP(D)M ou un caoutchouc NBR contenant des groupes carboxyle ou anhydride.

7. Composants selon les revendications 1 à 6, caractérisés par le fait qu'on utilise comme matières de charge dans la composition de caoutchouc du noir de carbone, de la silice des silicates, du carbonate de calcium, de l'oxyde de zinc et/ou de l'acide stéarique.

8. Composants selon les revendications 1 à 7, caractérisés par le fait que l'on utilise comme plastifiant jusqu'à 50 parties en poids d'huiles naphténiques par rapport à 100 parties en poids de caoutchouc.

9. Procédé pour fabriquer les composants selon les revendications 1 à 8,
caractérisé par le fait qu'on entoure de tous côtés l'agent de renforcement fibreux de polyamide ou d'un mélange à mouler contenant un polyamide, la composition du caoutchouc étant appliquée sur le plastique moulé A ainsi préparé, et étant vulcanisée.

10. Procédé selon la revendication 9,
caractérisé par le fait qu'on met en oeuvre la vulcanisation à des températures comprises entre 140 et 200°C en 3 à 30 minutes, de préférence à des températures de 150 à 180°C en 5 à 15 minutes.
